# EUROPEAN PATENT APPLICATION

(11) **EP 1 980 895 A1**
(43) Date of publication of application: **15.10.2008**
(21) Application number: 07707996.0
(22) Date of filing: 30.01.2007
(51) Int. Cl.: G02B 27/28, G02B 6/12

(54) **OPTICAL ISOLATOR**

(30) Priority: 31.01.2006 JP 2006021952
(71) Applicant: TOKYO INSTITUTE OF TECHNOLOGY, Tokyo 152-8550 (JP)
(72) Inventor: SAKURAI, Kazumasa, Meguro-Ku, Tokyo 152-8550 (JP); MIZUMOTO, Tetsuya, Meguro-Ku, Tokyo 152-8550 (JP)
(74) Representative: Pfau, Anton Konrad
(86) International application number: PCT/JP2007/051866
(87) International publication number: WO 2007/088998

(57) **Abstract**

An optical isolator is constituted by providing a substrate, a waveguiding layer lattice-matched to the substrate, and a non-reciprocal phase shifter, and a waveguide and a curved waveguide for guiding the waveguiding layer are formed in the waveguiding layer, and a branch coupler is also provided therein, furthermore, a refractive index of the waveguiding layer is made larger than 3.36 by changing a semiconductor composition.

## Description

### TECHNICAL FIELD

The present invention relates to an optical isolator having a miniaturized structure, and particularly relates to an optical isolator having a miniaturized structure in which a refractive index is increased by changing a semiconductor composition of a waveguiding layer having a lattice match to a substrate, and a device length is shortened by decreasing an allowable radius of curvature of a curved waveguide and utilizing a multimode interference-type branch coupler.

### BACKGROUND ART

An optical isolator is an element which allows light to transmit only in one direction but prevents the light from propagating in a direction opposite thereto. For example, by arranging the optical isolator at an emitting end of a semiconductor laser, the light emitted from the laser transmits through the optical isolator, and it is possible to be used this light as a light source for optical fiber communications. Conversely, the light which is going to be incident on the semiconductor laser through the optical isolator prevents by the optical isolator, so that the light cannot be incident on the semiconductor laser. Unless the optical isolator is placed at the emitting end of the semiconductor laser, a reflected return light will be incident on the semiconductor laser, and thereby a degradation of oscillation characteristics of the semiconductor laser is caused. Namely, the optical isolator serves to block the light which is going to be incident on the semiconductor laser, and to maintain a stable oscillation without degrading the characteristics of the semiconductor laser.

In optical active elements such as not only the aforementioned semiconductor laser but also an optical amplifier or the like, operating characteristics of the element are degraded by unintentional incidence of light from an opposite direction. Since the optical isolator allows the light to transmit only in one direction, it is possible to prevent the unintentional incidence of light to the optical active element from the opposite direction.

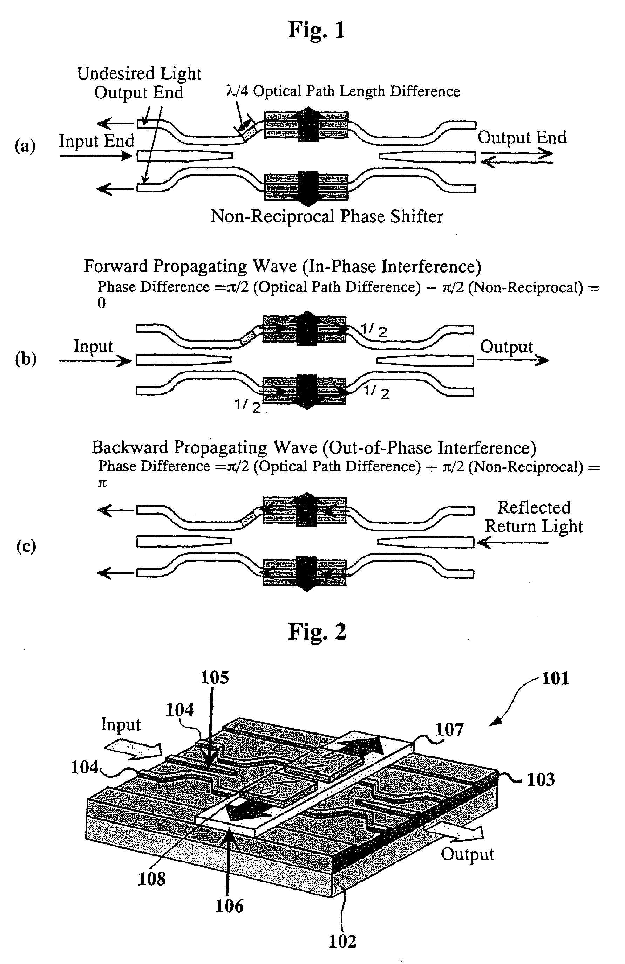

Fig.1 shows an operating principle of the optical isolator. The optical isolator is set so that light waves which propagate in two optical waveguides may be in phase to forward propagating waves and may be in opposite phases to backward propagating waves which propagate in opposite directions, by utilizing a phase variation whose magnitude is different depending on a propagation direction generated in two optical waveguides constituting an optical interferometer (hereinafter, referred to as "non-reciprocal phase shifting effect") (Fig. 1(a)).

In a case where two light waves are in phase, the light waves are output from a central output end in a branch coupler provided on the output side based on the symmetry of the structure (Fig. 1(b)).

Meanwhile, in a case where two light waves are in opposite phases, since an antisymmetric distribution is formed in a branch coupler provided on the input side from the symmetry of the structure, the light waves are not output from the central output end of the coupler but are output from undesired light output ends provided on both sides of the central output end (Fig. 1 (c)).

Namely, the light wave launched from the central input end of the branch coupler on the left-hand side in the figure is output from the central output end of the branch coupler on the right-hand side in the figure. Conversely, the light wave launched from the central output end of the branch coupler on the right-hand side in the figure can isolate a propagation light of the opposite direction launched from the central output end of the branch coupler on the right-hand side in the figure without entering to the central input end of the branch coupler on the left-hand side in the figure.

In order to achieve an operation of a branching and coupling characteristic of such a light of the optical isolator, a constant amount of non-reciprocal phase shifting effect is required. The non-reciprocal phase shifting effect can be generated by arranging a magneto-optical material (material which has a magneto-optical effect) in a planar waveguide, externally applying a magnetic field in a direction perpendicular to a propagation direction (transverse direction) in a waveguide plane, and orienting magnetization of the magneto-optical material. The phase variation due to the magneto-optical effect is determined by the relation between the propagation direction of the light and an orientation direction of the magnetization, and the phase variation becomes different in a case where the propagation direction is reversed while keeping a magnetizing direction.

Since the magnetic fields are applied in an antiparallel to each other to two waveguides constituting the interferometer in the optical isolator shown in Fig. 1, a phase difference of the light waves when each light waves propagate the same distance in two waveguides corresponds to an amount of non-reciprocal phase shifting (difference of the phase variation between the forward propagating wave and the backward propagating wave). Additionally, if a phase difference of +φ occurs between two waveguides due to the non-reciprocal phase shifting effect to the forward propagating wave, a phase difference of -φ which is an opposite sign to that will occur to the backward propagating wave.

Here, an optical path length difference corresponding to 1/4 wavelength is provided in two waveguides constituting the interferometer. It is intended that the light which propagates through a waveguide with longer optical path gives a phase variation which is larger only p/2 regardless of the direction. Namely, if the waveguide with longer optical path is made to generate a phase difference due to the non-reciprocal phase shifting effect (hereinafter, referred to as "non-reciprocal phase shifting phase difference") of -p/2 as compared with a waveguide with shorter optical path to the forward propagating wave, the light waves which propagate through two waveguides are in phase to the forward propagating wave. At this time, since the sign of the non-reciprocal phase shifting phase difference is reversed when the propagation direction is reversed, the non-reciprocal phase shifting phase difference of +p/2 is given to the waveguide with longer optical path. This phase difference and the phase difference of +p/2 due to the optical path length difference are added, so that the light will input into the branch coupler in the state of an opposite phase. From the discussion described above, it can be concluded that the non-reciprocal phase shifting phase difference of p/2 is required in the interference-type optical isolator shown in Fig. 1.

Conventionally, an interference-type optical isolator 101 shown in Fig. 2 with a perspective view has been devised as the optical isolator suitable for integration with the semiconductor laser.

This conventional optical isolator 101 is constituted that a waveguiding layer 103 using a semiconductor material is provided on a compound semiconductor substrate 102, a waveguide 104 and a branch coupler 105 are provided on this waveguiding layer 103, and further a non-reciprocal phase shifter 106 is provided on the waveguiding layer 103. Incidentally, the non-reciprocal phase shifter 106 is provided with a cladding layer 107 composed of a magneto-optical material, and magnetic field applying means 108 for completing magnetization of the magneto-optical material in a predetermined direction, and the non-reciprocal phase shifter 106 is formed that the magnetic field applying means 108 is provided on the cladding layer 107.

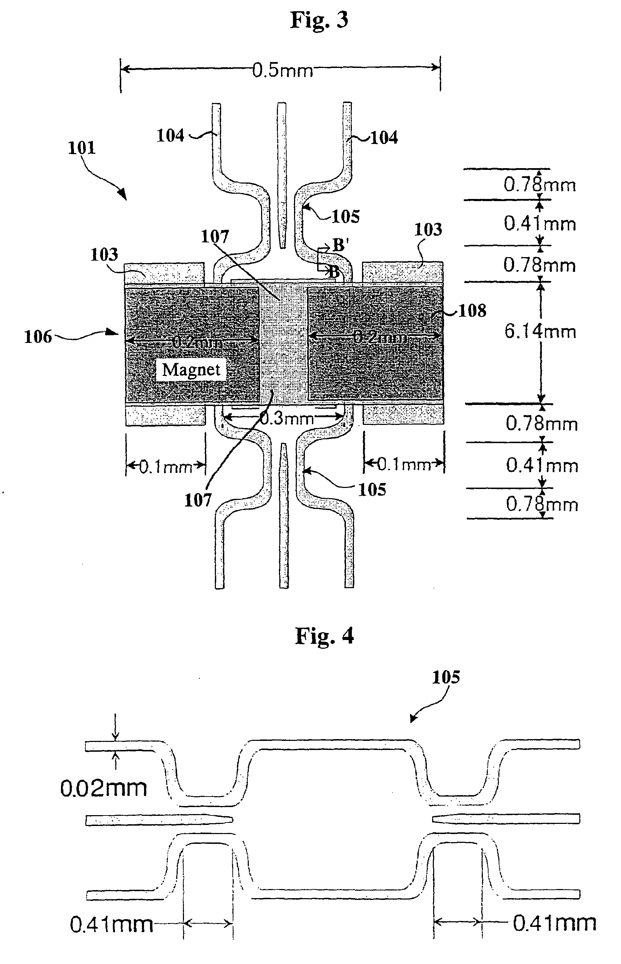

An example of the device size of this optical isolator 101 is shown in Fig. 3 with a schematic top view.

This optical isolator 101 is constituted in such a way that InP is used as the substrate 102, GaInAsP with a refractive index of 3.36 (bandgap wavelength λ_{g}=1.25µm and lattice match to InP substrate 102) is used as the waveguiding layer 103, and Ce: YIG (Faraday rotation coefficient=-4500 deg/cm at an operating wavelength of semiconductor laser λ=1.55µm) is used as the cladding layer 107.

And, the non-reciprocal phase shifting phase difference is proportional to a propagation distance. Hence, a larger non-reciprocal phase shifting effect per unit propagation length can shorten a propagation distance required to generate a phase difference of p/2 as compared with a smaller one. In a structure of the waveguide 104 of this optical isolator 101, the amount of non-reciprocal phase shifting per unit propagation length has been 0.256mm⁻¹, and the propagation distance required to obtain the non-reciprocal phase difference of p/2 has been 6.14mm.

Additionally, a tapered branch coupler is used as the branch coupler 105, and thereby in order to obtain a perfect branching and coupling characteristic required for the operation of the optical isolator 101 as described above, as shown in Fig.4 with a schematic configuration view of the branch coupler 105, a length of 0.41mm has been required for the waveguide of a coupling portion (hereinafter, referred to as "coupling waveguide").

Further, it is necessary to provide a S-shaped curved waveguide portions before and after the coupling waveguide, and in a case where a rib-type waveguide is formed with the waveguiding layer 103 of GaInAsP whose refractive index is 3.36, as shown in Fig. 3, a length of 0.78mm has been required for curved waveguide portions.

Namely, in this conventional optical isolator 101, a length of 0.78×4=3.12mm is required for the curved portions of the waveguide 104, a length of 0.41×2=0.82mm is required for the tapered branch couplers 105, and a length of 6.14mm is required for the non-reciprocal phase shifter 106, as a result of this, the device length of 10.08mm has been required for the optical isolator 101 in a longitudinal direction.

Incidentally, the device length of this conventional optical isolator 101 in a width direction is determined by an allowable radius of curvature of the S-shaped curved waveguide, and an amount of shift thereof in the transverse direction. It is designed on condition that the amount of shift in the transverse direction of 0.15mm is required for one S-shaped curved waveguide. Namely, since it is necessary to apply antiparallel magnetic fields to a portion of the waveguide 104 corresponding to just below the non-reciprocal phase shifter 106, an interval between two waveguides needs to be set to 0.3mm. Additionally, in this case, a radius of curvature (R) of 1.0mm is required for the S-shaped curved waveguide.

However, in the conventional optical isolator having the structure as described above, since a length in a direction (width direction) perpendicular to a direction in which the light propagates is from several times to several ten times (about from several µm to 100µm) of the width of the waveguide (several µm), it does not become a serious problem for miniaturizing. But an element length (the length of the element along the direction in which the light propagates) is in the order of millimeter, so that it has become a serious problem for miniaturizing of the integrated optical circuit.

### DISCLOSURE OF THE INVENTION

The present invention is made in view of the aforementioned problems. Therefore, an object of the present invention is to provide an optical isolator whose device length is shortened in which a refractive index of a waveguiding layer is increased, and additionally, a thickness of the waveguiding layer which the maximum amount of non-reciprocal phase shifting is obtained at each refractive index is set, and thereby a difference between an operating wavelength and a bandgap wavelength is secured.

The present invention relates to an optical isolator, and the aforementioned object of the present invention is achieved by an optical isolator comprising a substrate, a waveguiding layer lattice-matched to the substrate, and a non-reciprocal phase shifter, in which a waveguide and a curved waveguide for guiding the waveguiding layer are formed in the waveguiding layer, and a branch coupler is also provided therein, wherein a refractive index of the waveguiding layer is made larger than 3.36 by changing a semiconductor composition.

In addition, the aforementioned object of the present invention is effectively achieved by providing the optical isolator, wherein the waveguiding layer has a thickness to generate the maximum amount of non-reciprocal phase shifting to a refractive index of the waveguiding layer.

Further, the aforementioned object of the present invention is more effectively achieved by providing the optical isolator, wherein a length of the non-reciprocal phase shifter is made less than 6.14mm.

Further, the aforementioned object of the present invention is more effectively achieved by providing the optical isolator, wherein a radius of curvature of the curved waveguide is less than 1.00mm.

Further, the aforementioned object of the present invention is more effectively achieved by providing the optical isolator, wherein the branch coupler is a multimode interference-type branch coupler.

Further, the aforementioned object of the present invention is more effectively achieved by providing the optical isolator, wherein a device length of the optical isolator is less than 10.08mm.

Further, the aforementioned object of the present invention can be more effectively achieved by providing the optical isolator, wherein the waveguiding layer is a III-V group compound semiconductor.

Furthermore, the aforementioned object of the present invention is more effectively achieved by providing the optical isolator, wherein the substrate is InP, and the waveguiding layer is GaₓIn₁₋ₓAs_{y}P_{1-y} (0<x<1, 0<y<1).

### EFFECT OF THE INVENTION

According to the optical isolator of the present invention, since the refractive index of the waveguiding layer can be increased as compared with that of the conventional waveguiding layer, a non-reciprocal phase shifting effect per unit propagation length can be increased, and thereby it can be increased the amount of non-reciprocal phase shifting. Hence, the device length of the optical isolator can be shortened, and thereby the optical isolator can be miniaturized.

Additionally, since an optical confinement effect in a transverse direction can be enhanced by increasing the refractive index of the waveguiding layer, the radius of curvature of the S-shaped curved waveguide can be decreased. Hence, the device length of the optical isolator can be further shortened, and thereby the optical isolator can be more miniaturized.

Further, it is possible to more miniaturize the optical isolator by using not a tapered branch coupler but the multimode interference-type branch coupler as the branch coupler.

Namely, it is possible to make the length of the S-shaped waveguide in a longitudinal direction less than 0.78mm and the length of the coupler less than 0.41mm by making the length of the non-reciprocal phase shifter less than 6.14mm and the radius of curvature of the S-shaped waveguide less than 1.00mm, and thereby the device length of the optical isolator can be made less than 10.08mm.

Note that, the refractive index can be increased by changing the semiconductor composition of the waveguiding layer, and thereby, the thickness of the waveguiding layer is thinned. Hence, it is possible to miniaturize of the optical isolator in a height direction according to the thickness of the waveguiding layer.

### BRIEF DESCRIPTION OF THE DRAWINGS

Fig. 1 is a schematic illustration view of an operating principle of an interference-type optical isolator.
Fig. 2 is a perspective view showing one example of a conventional interference-type optical isolator.
Fig. 3 is a plan view showing one example of a structure of a conventional optical isolator.
Fig. 4 is a schematic composition view of a conventional tapered branch coupler.
Fig. 5 is a plan view showing one example of a structure of an optical isolator according to the present invention.
Fig. 6 is a cross sectional view of A-A' in Fig. 5.
Fig. 7 is a graph showing a relation between compound semiconductor materials and their bandgap wavelengths.
Fig. 8 is a graph showing a relation between a bandgap wavelength and a refractive index of a waveguiding layer.
Fig. 9 is a graph showing a relation between a thickness of the waveguiding layer of the optical isolator according to the present invention and an amount of non-reciprocal phase shifting of the optical isolator according to the present invention.
Fig. 10 is a graph showing a relation between the refractive index of the waveguiding layer of the optical isolator according to the present invention and a thickness of the waveguiding layer which can obtain the maximum amount of non-reciprocal phase shifting of the optical isolator according to the present invention.
Fig. 11 is a graph showing a relation between the refractive index of the waveguiding layer of the optical isolator according to the present invention and an optical power fraction in the cladding layer of the optical isolator according to the present invention.
Fig. 12 is a graph showing a relation between the refractive index of the waveguiding layer of the optical isolator according to the present invention and a length of the non-reciprocal phase shifter of the optical isolator according to the present invention.
Fig. 13 is a cross sectional view of B-B' in Fig. 3.
Fig. 14 is a graph showing a relation between a radius of curvature and an amount of curved losses in a curved waveguide shown in Fig. 13.
Fig. 15 is a cross sectional view of C-C' in Fig. 5.
Fig. 16 is a graph showing a relation between a radius of curvature and an amount of curved losses in a curved waveguide shown in Fig. 15.
Fig. 17 is a view showing a two-dimensional example of a waveguide with step refractive index distribution of an MMI coupler.
Fig. 18 is a graph showing one example of a mode within the waveguide with step refractive index distribution of the MMI coupler.
Fig. 19 shows one example of a mode sectional view of a multimode waveguide of an MMI coupler.
Fig. 20 is a schematic composition view of a multimode interference-type branch coupler.
Fig. 21 is a perspective view showing another example of an optical isolator according to the present invention.
Fig. 22 is a cross sectional view of D-D' in Fig. 21.
Fig. 23 is a graph showing a relation between a thickness of a waveguiding layer of the another embodiment of the optical isolator according to the present invention and an amount of non-reciprocal phase shifting of the optical isolator according to the present invention.
Fig. 24 is a graph showing a relation between the refractive index of the waveguiding layer of the optical isolator according to the present invention and a length of a non-reciprocal phase shifter of the optical isolator according to the present invention.
Fig. 25 is a graph showing a relation between the thickness of the waveguiding layer and the amount of non-reciprocal phase shifting, in case of the optical isolator whose operating wavelength λ=1.31µm.
Fig. 26 is a graph showing a relation between the refractive index of the waveguiding and the length of the non-reciprocal phase shifter, in case of the optical isolator whose operating wavelength λ=1.31µm.

### DESCRIPTION OF THE PREFERRED EMBODIMENT

Hereinafter, referring to the drawings, an optical isolator according to the present invention will be described in detail.

### [Optical isolator]

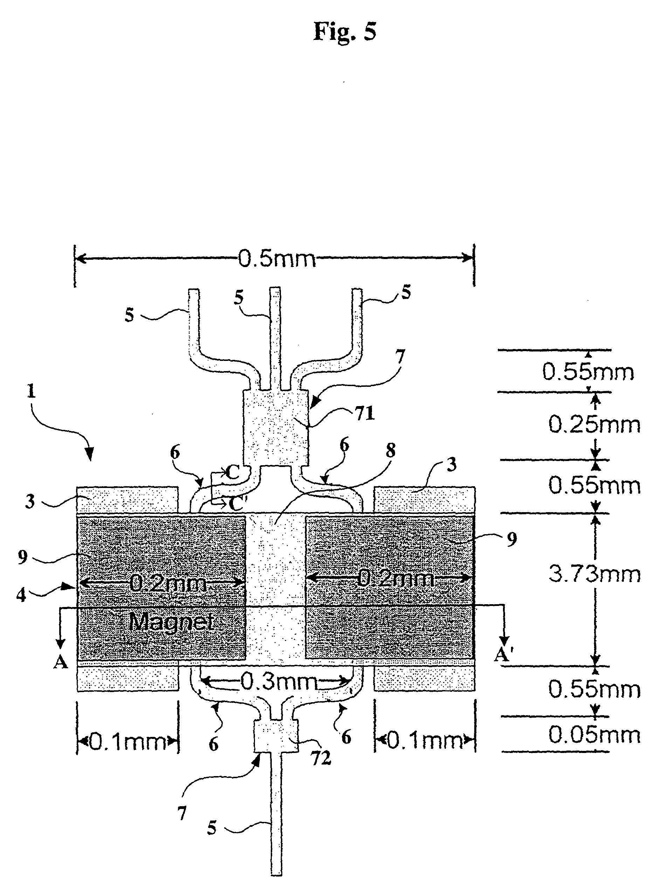

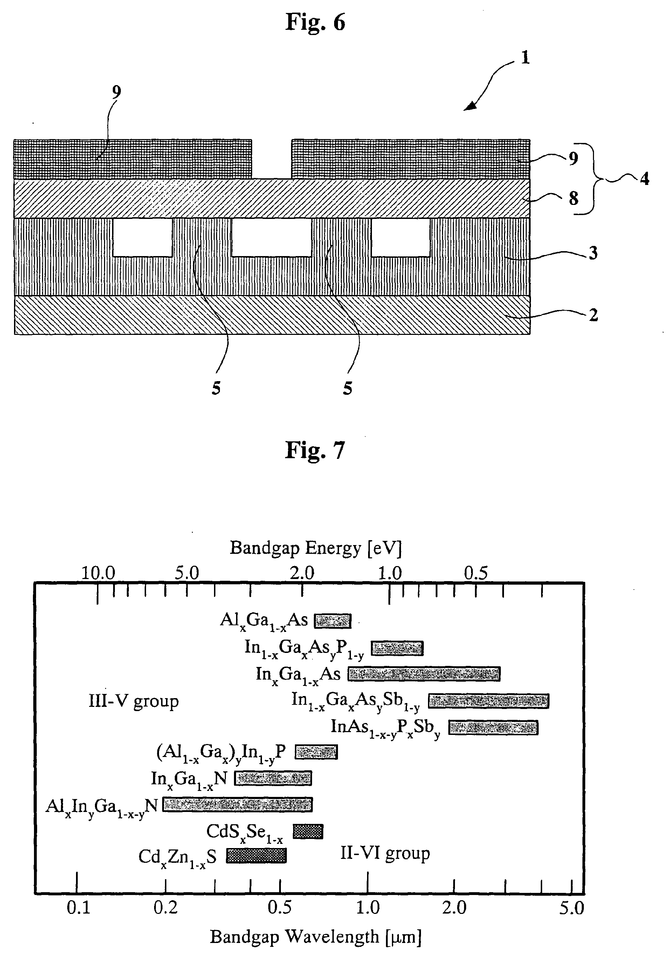

Fig. 5 is a plan view showing one example of an optical isolator 1 according to the present invention, and it is a view corresponding to a conventional optical isolator 101 in Fig. 3. Additionally, Fig. 6 is a cross sectional view of A-A' in Fig. 5, and it is a schematic sectional view of the optical isolator 1.

As shown in the figure, the optical isolator 1 is provided with a substrate 2, a waveguiding layer 3, and a non-reciprocal phase shifter 4, and a waveguide 5 and a curved waveguide 6 which guide the waveguiding layer 3 are formed in the waveguiding layer 3, and a branch coupler 7 is also provided therein. That is, the optical isolator 1 is constituted by providing the waveguiding layer 3 which is formed on the substrate 2 using a semiconductor material so as to be lattice-matched to the substrate 2, and in which the waveguide 5 and the curved waveguide 6 are formed and the branch coupler 7 is provided, and further, by providing the non-reciprocal phase shifter 4 on the waveguiding layer 3. This non-reciprocal phase shifter 4 is provided with a cladding layer 8 composed of a magneto-optical material, and a magnetic field applying means 9 for completing magnetization of the magneto-optical material in a predetermined direction, and non-reciprocal phase shifter 4 is constituted by providing the magnetic field applying means 9 on the cladding layer 8.

And as shown in the figure, a multimode interference-type branch coupler is used as the branch coupler 7 in the optical isolator 1. The multimode interference-type branch coupler is provided with an input portion MMI coupler 71 arranged on an input side of a laser beam, and an output portion MMI coupler 72 arranged on an output side of a laser beam as shown in the figure.

As shown in the figure, a length of the curved waveguide 6 is 0.55mm, a length of the input portion MMI coupler 71 is 0.25mm, and a length of the output portion MMI coupler 72 is 0.05mm. And a length of the non-reciprocal phase shifter 4 is 3.73mm (meanwhile, conventionally, it was 6.14mm).

Since the optical isolator 1 is constituted as described above, a device length which was 10.08mm conventionally can be shortened to 5.68mm.

Incidentally, the length of each component of the aforementioned optical isolator 1 is one example of the most suitable embodiment. Therefore, the length of each of these components also changes by changing a thickness of the waveguiding layer 3, a refractive index of the waveguiding layer 3, and an operating wavelength λ of the semiconductor laser, or the like, which will be described hereinafter. However, if the optical isolator 1 whose device length is less than 10.08mm can be obtained, an object of the present invention will be achieved.

Moreover, as shown in Fig. 5 and Fig. 6, two waveguides 5, 5 are provided under the non-reciprocal phase shifter 4 in the optical isolator 1. A distance between these two waveguides 5 and 5 (a distance between the waveguides 5 and 5 corresponding to a portion just below the non-reciprocal phase shifter 4) is set to 0.3mm.

Next, each component which constitutes the optical isolator 1 will be described in detail.

### [Substrate 2]

A compound semiconductor substrate is used as the substrate 2 in the optical isolator 1. Note that, as will be hereinafter described, since an operating wavelength of the semiconductor laser is λ=1.55µm, an InP substrate is used as the substrate 2 in the present embodiment. However, compound semiconductor substrates according to a waveband of the operating wavelength of the laser may be used as the substrate 2.

### [Waveguiding layer 3]

The waveguiding layer 3 is formed in the same process as an active layer of the semiconductor laser by using a compound semiconductor material. Moreover, when such a structure is employed, crystal growth of the waveguiding layer 3 of the optical isolator 1 and crystal growth of the active layer of the semiconductor laser can be simultaneously performed with the same kind of material, so that optical axis alignment in a thickness direction is achieved in this stage.

Incidentally, as the waveguiding layer 3 used for the optical isolator 1, a material whose refractive index is larger than 3.36 by changing the semiconductor composition is used.

Namely, a material composed of a III-V group compound semiconductor is used as the waveguiding layer 3. As such a waveguiding layer 3, for example, GaₓIn₁₋ₓAs_{y}P_{1-y}, AlₓIn₁₋ₓGa_{y}As_{1-y} (0<x<1, 0<y<1), or the like can be used, as shown in a graph of a relation between compound semiconductor materials and their bandgap wavelengths in Fig.7. Incidentally, hereinafter, while a case where GaₓIn₁₋ₓAs_{y}P_{1-y} is used as the waveguiding layer 3 will be described, a case where the waveguiding layer composed of other III-V group compound semiconductors is used is also similar to that.

In order to improve crystallinity of GaInAsP, the waveguiding layer 3 using GaInAsP has a lattice match whose lattice constant is identical to that of the InP substrate 2. The refractive index of the waveguiding layer 3 is changed by changing the semiconductor composition according to change an x value and a y value of GaₓIn₁₋ₓAs_{y}P_{1-y} without destroying this lattice match, so that the refractive index thereof is adjusted so as to be larger than 3.36.

Generally, when the refractive index of the waveguiding layer 3 is increased, bandgap energy which excites electrons existing in a valence band to a conductor is decreased. Namely, the bandgap wavelength is increased by follows.

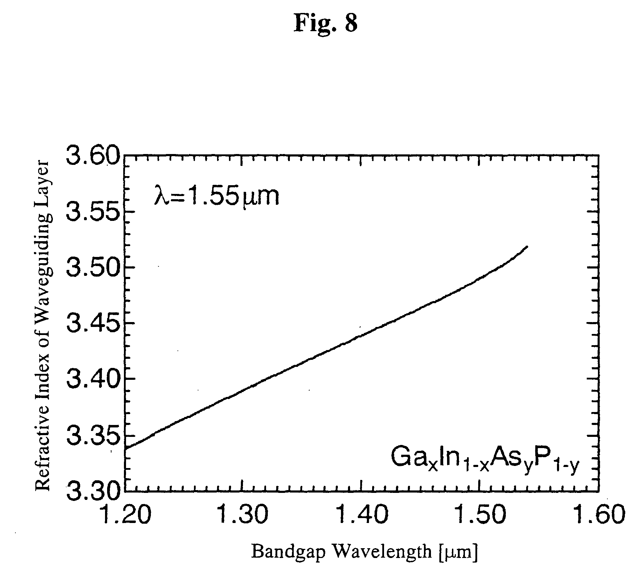

Bandgap energy=[1.24 eV/bandgap wavelength (µm)] Incidentally, a relation between the bandgap wavelength and the refractive index of the waveguiding layer is shown in Fig. 8. Note that, the semiconductor laser wavelength is λ=1.55µm, GaInAsP is used as the waveguiding layer 3, and GaInAsP which is the waveguiding layer 3 is lattice-matched to the InP which is the substrate 2.

When the bandgap wavelength is increased and it is to close to the operating wavelength, it is necessary to consider an energy decrease of the laser beam due to the influence of the optical absorption by GaₓIn₁₋ₓAs_{y}P_{1-y} in the operating wavelength. For this reason, it is necessary to choose the semiconductor composition of GaₓIn₁₋ₓAs_{y}P_{1-y} and to determine the refractive index so that the difference between the operating wavelength and the bandgap wavelength may be a constant level or more (the degree in which an energetic yield does not occur a problem after in energy of the laser beam is decrease).

However, even when the difference between the operating wavelength (1.55µm in the present embodiment ) and the bandgap wavelength is the constant level or more, in practice, GaInAsP having a bandgap wavelength longer than the operating wavelength cannot be used for the waveguiding layer. It is because that GaInAsP having the bandgap wavelength longer than the operating wavelength is unsuitable as the waveguiding layer of the optical isolator since GaInAsP absorbs light of the operating wavelength at highly efficiency. For that reason, GaInAsP having the bandgap wavelength shorter than the operating wavelength is used for the waveguiding layer 3.

Further, absorption of light in the waveguide 5 does not become sufficiently small only by the bandgap wavelength of GaInAsP being slightly shorter than the operating wavelength, so that a forward direction loss of the optical isolator 1 cannot be reduced sufficiently. For this reason, in practice, GaInAsP having a remarkably shorter bandgap wavelength compared with the operating wavelength is used for the waveguiding layer.

Here, in the operating wavelength, there is no clear definition about the point that how much the bandgap wavelength should be shortened from the operating wavelength in order to choose the bandgap wavelength so that the absorption of light in the waveguide 5 may become sufficiently small. Empirically, if GaInAsP whose bandgap wavelength is shorter than 0.1µm compared to the operating wavelength is used, it can be said that the absorption of light in the waveguide 5 is sufficiently small.

Incidentally, in the present embodiment, supposing that the operating wavelength λ of the optical isolator 1 is not less than 1.52µm, a case where GaInAsP whose bandgap wavelength is λ_{g}=1.42µm is used as the waveguiding layer is shown.

Accordingly, the thickness of the waveguiding layer 3 is a thickness which generates the maximum amount of non-reciprocal phase shifting to the operating wavelength of the semiconductor laser.

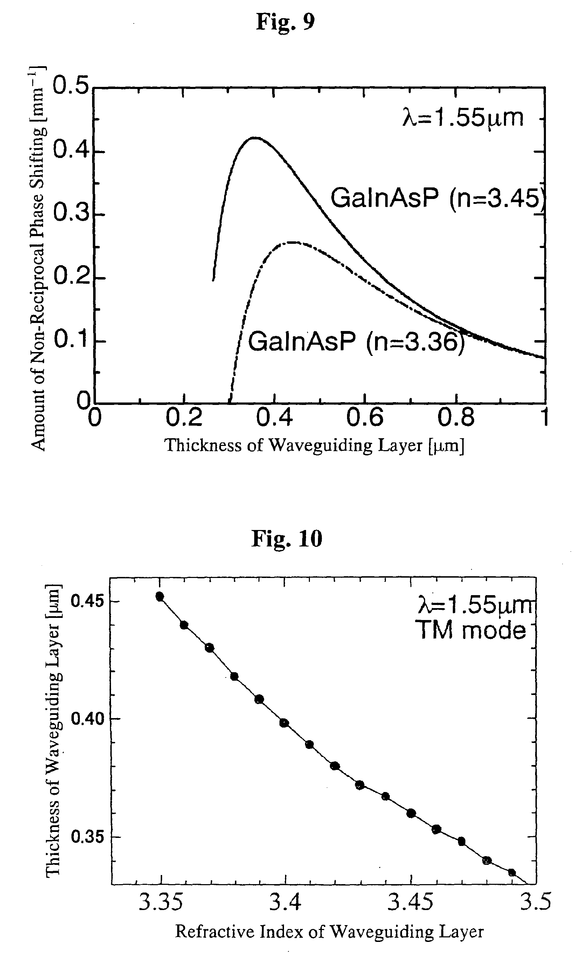

Fig. 9 is a graph showing a relation between the thickness of the waveguiding layer 3 and the amount of non-reciprocal phase shifting. Namely, it is a graph showing one example of calculation results of the magnitude of the amount of non-reciprocal phase shifting by changing the thickness of the waveguiding layer 3 while fixing the refractive index of the waveguiding layer 3. Incidentally, in Fig. 9, the operating wavelength of the semiconductor laser is λ=1.55µm, InP is used as the substrate 2, GaInAsP which the refractive index are 3.36 and 3.45 are used as the waveguiding layer 3, and a magneto-optical material (Ce: YIG) which provides a non-reciprocal phase variation is used as the cladding layer 8.

From Fig. 9, in a case where the refractive index of the waveguiding layer 3 is fixed, it turns out that the amount of non-reciprocal phase shifting changes according to the thickness of the waveguiding layer 3. Incidentally, in Fig. 9, the thickness of the waveguiding layer 3 which the maximum amount of non-reciprocal phase shifting can be obtained is 0.44µm when the refractive index of the waveguiding layer 3 is 3.36, and is 0.36µm when the refractive index of the waveguiding layer is 3.45.

Fig. 10 is a graph showing a relation between the refractive index of the waveguiding layer 3, and the thickness of the waveguiding layer 3 which the maximum amount of non-reciprocal phase shifting is obtained. As shown in Fig. 10, the thickness of the waveguiding layer 3 which this maximum amount of non-reciprocal phase shifting can be obtained changes according to the change of the refractive index of the waveguiding layer 3. Note herein that, in Fig. 10, the semiconductor laser wavelength is λ=1.55µm, and the GaInAsP waveguiding layer is used as the waveguiding layer 3.

### [Non-reciprocal phase shifter 4]

As described above, the non-reciprocal phase shifter 4 is provided with the cladding layer 8 composed of a magneto-optical material, and the magnetic field applying means 9 for completing magnetization of the magneto-optical material in a predetermined direction, and non-reciprocal phase shifter 4 is constituted that the magnetic field applying means 9 is provided on the cladding layer 8.

While a cladding layer which is crystal-grown on an appropriate substrate is used (this substrate is located between the cladding layer 8 and the magnetic field applying means 9), this substrate is omitted in the figure.

In addition, as shown in the figure, in the present embodiment, a pair of small permanent magnets is used as the magnetic field applying means 9 and a pair of small permanent magnets is provided so that the homopolarities may face to each other. However, various means may be used for the magnetic field applying means 9 as far as they have a function similar to that of the small permanent magnet in order to complete the magnetization of the magneto-optical material used for the cladding layer 8 in a predetermined direction. Furthermore, the magneto-optical material itself used for the cladding layer 8 may have been magnetized in advance without providing the magnetic field applying means 9.

In order to miniaturize the non-reciprocal phase shifter 4 described above, it is necessary to increase the amount of non-reciprocal phase shifting in a short path.

Moreover, in order to obtain large amount of non-reciprocal phase shifting, it is necessary to increase the optical power fraction in the cladding layer 8 in the non-reciprocal phase shifter 4.
(1) Since the optical confinement effect to the waveguiding layer 3 is improved when the refractive index of the waveguiding layer 3 is increased while keeping the thickness of the waveguiding layer 3 constant, the optical power fraction in the cladding layer 8 which is the magneto-optical material is reduced.
(2) Meanwhile, when the refractive index of the waveguiding layer 3 is increased, a film thickness (cutoff film thickness) in which the light cannot propagate in the waveguide 5 in a thickness of the waveguiding layer 3 which is equal to or less than a constant value will be thin. Namely, when the refractive index of the waveguiding layer 3 is increased, since the thickness of the waveguiding layer 3 in the non-reciprocal phase shifter 4 can be thin, and thereby the optical power fraction in the cladding layer 8 is increased.

A matter in item (2) is an effect which oppositely acts to a matter in item (1), and whether the optical power fraction in the magneto-optical material becomes larger or smaller will be determined depending on which either effect of item (1) or effect of item (2) becomes superior.

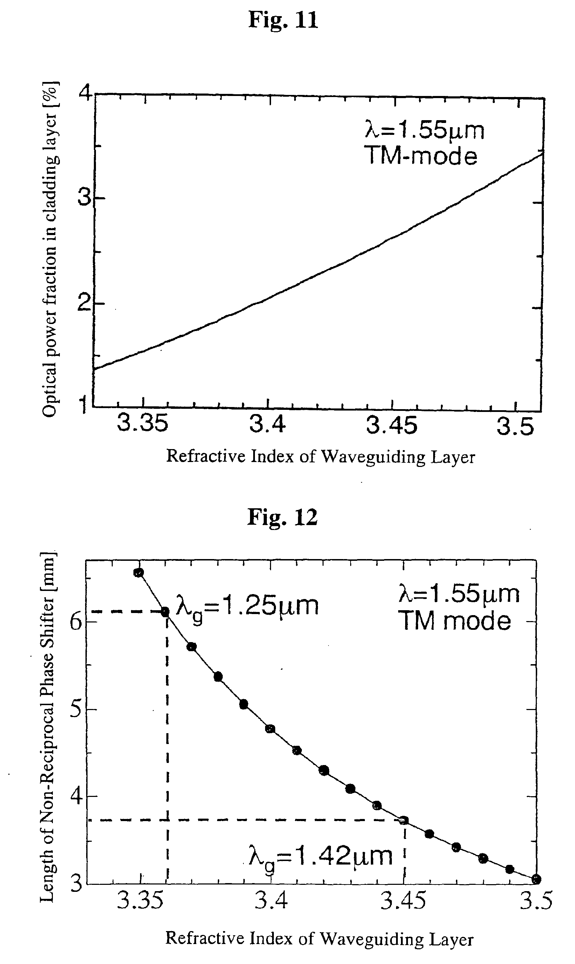

Fig. 11 is a graph showing a relation between the refractive index of the waveguiding layer 3 and the optical power fraction in the cladding layer 8. Incidentally, in Fig. 11, the operating wavelength is λ=1.55µm, a waveguiding layer which is a GaInAsP waveguiding layer and whose thickness is a thickness which can be obtained the maximum amount of non-reciprocal phase shifting at each refractive index is used as the waveguiding layer 3, and Ce: YIG is used as the cladding layer 8.

From Fig. 11, it turns out that the optical power fraction in the cladding layer 8 is increased when the refractive index of the waveguiding layer 3 is increased. Namely, when an optical power fraction of the conventional waveguiding layer with the refractive index of 3.36 is compared with that of the waveguiding layer 3 of the present invention with the refractive index of 3.45, it turns out that the optical power fraction in the present invention is increased by about 1.0%. Hence, it turns out that the effect of item (2) is superior to that of item (1) in Fig. 11.

Further, Fig. 12 is a graph showing a relation between the refractive index of the waveguiding layer 3 and the length of the non-reciprocal phase shifter 4. Incidentally, in Fig. 12, the operating wavelength is λ=1.55µm, and a waveguiding layer which is a GaInAsP waveguiding layer and whose thickness is a thickness which can be obtained the maximum amount of non-reciprocal phase shifting at each refractive index is used as the waveguiding layer.

From Fig. 11, when the optical power fraction in the cladding layer 8 is increased in the non-reciprocal phase shifter 4, it turned out that the length of the non-reciprocal phase shifter 4 can be shortened from conventional 6.14mm up to a length obtained at the refractive index of the waveguiding layer 3 in which a difference between the bandgap wavelength and the operating wavelength is a constant value or more.

### [Curved waveguide 6]

In order to miniaturize the curved waveguide 6 and thereby to miniaturize the optical isolator 1, it is necessary to decrease a radius of curvature of a curved portion of the curved waveguide 6 formed in the waveguiding layer 3. However, when the radius of curvature of the curved waveguide 6 is decreased, a loss of light (loss of light due to the curve, this is hereinafter called "curving loss") caused that the light is radiated to the outside of the waveguides 5 and 6 is increased.

In order to prevent this curving loss to the full, it is necessary to enhance the optical confinement effect to the core portion of the waveguide 5 (portion where the light wave is focused in the transverse direction within the waveguiding layer 3). Incidentally, the S-shaped waveguide is used as the curved waveguide 6 for the optical isolator 1.

Here, in case where the radius of curvature is changed, it is compared the curving loss in the curved waveguide 6 of the conventional optical isolator 101 and that of the optical isolator 1 of the present invention.

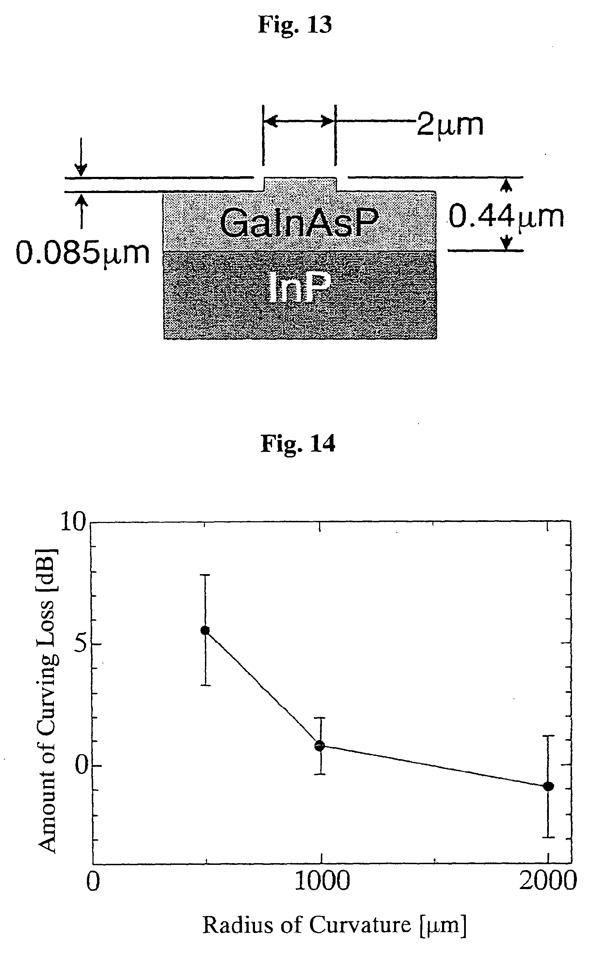

Fig. 13 is a cross sectional view of B-B' in Fig. 3 that shows the conventional optical isolator 101, and Fig. 14 is a graph showing a relation between the radius of curvature and the amount of curving loss in the curved waveguide (the refractive index of the waveguiding layer is 3.36, and the operating wavelength is 1.55µm) shown in Fig. 13.

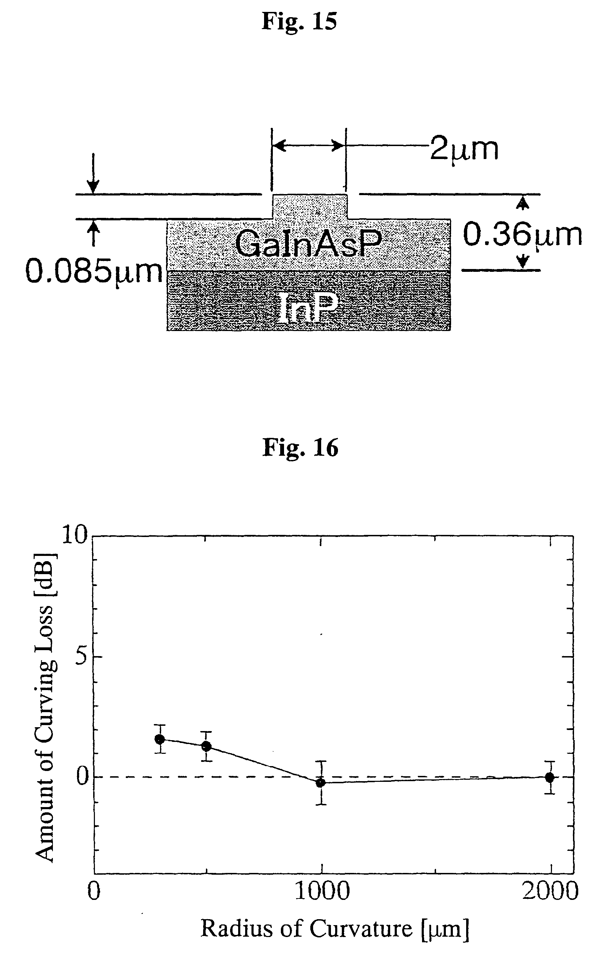

Fig. 15 is a cross sectional view of C-C' in Fig. 5 that shows the optical isolator of the present invention, and Fig. 16 is a graph showing a change of the curving loss when the radius of curvature is changed in the curved waveguide 6 (the refractive index of the waveguiding layer 3 is 3.45, the operating wavelength is 1.55µm) shown in Fig. 15.

However, since the light which passes through the curved waveguide 6 has not only the curving loss but also a scattering loss due to roughness of a side wall of the waveguide 5, it is difficult to determine the pure curving loss as the actual measurement. For this reason, a large difference will be produced between a theoretical value of the curving loss in a simulation and an actual measurement value of the curving loss. Accordingly, in order to come closer to reality, the measurement values of the curving loss plotted in Fig. 14 and Fig. 16 are the actual measurement values including also the scattering loss, and further, are average values of the actual measurement values for several times. Additionally, the measurement values of the curving loss shown in Fig. 14 and Fig. 16 are loss values in one section of the curved waveguide 6.

As for the curved waveguide of the conventional optical isolator shown in Fig. 14, the curving loss is about 1 dB when the radius of curvature is R=1.0mm (1,000µm). However, as shown in Fig. 14, in the conventional optical isolator, when the radius of curvature R of the curved waveguide is further decreased than 1.0mm, the curving loss will increase rapidly. The reason why the curving loss increases rapidly like this is that the light is radiated to the outside of the waveguide at a burst. Therefore, the curved waveguide of the conventional optical isolator has not been able to decrease the radius of curvature R less than 1.0mm.

Meanwhile, as shown in Fig.16, as for the curved waveguide 6 of the optical isolator 1 of the present invention shown in Fig. 15, even if the radius of curvature R is decreased less than 1.0mm, the curving loss does not increase rapidly though it increases gradually.

Namely, according to the curved waveguide 6 of the optical isolator 1 of the present invention, the optical confinement effect is obtained to the core portion of the waveguide 5, and thereby the curving loss is effectively suppressed. For that reason, since the radius of curvature R of the curved waveguide 6 can be decreased less than 1.0mm, the device length of the curved waveguide 6 can be shortened, and thereby the device length of the optical isolator 1 can be shortened and thus it can be miniaturized the optical isolator 1.

### [Branch coupler 7]

As described above, a multimode interference-type branch coupler provided with the input portion MMI coupler 71 and the output portion MMI coupler 72 is used as the branch coupler 7 in the optical isolator 1 of the present invention. As a result of this, since a length of the coupling waveguide where the light waves are branched and coupled can be shortened, the optical isolator 1 can be further miniaturized.

Namely, in the case of the multimode interference-type branch coupler, three input waveguides and two output waveguides are provided in the input portion MMI coupler 71, and two input waveguides and one output waveguide are provided in the output portion MMI coupler 72.

The reason why structure of the input portion and that of the output portion are different is that, in the case of the multimode interference-type branch coupler, in the input portion MMI coupler 71, since it is necessary to be radiated outside efficiently the light waves which be incident in opposite phases, it is necessary to provide three input waveguides and two output waveguides. Meanwhile, in the output portion MMI coupler 72, since the light waves which propagate through two waveguides (input waveguides) constituting the interferometer be incident on the output portion MMI coupler 72 in same phase, and only one output waveguide may be provided.

On the other hand, in the conventional tapered branch coupler 105 shown in Fig. 4, three input waveguides and two output waveguides are provided in the input side, and two input waveguides and three output waveguides are provided in the output side, so that the composition in the input side is not different from that of the output side.

Hence, since the multimode interference-type branch coupler is smaller than the tapered branch coupler in size, it can be miniaturized the optical isolator 1 when the multimode interference-type branch coupler is used as the branch coupler 7.

Additionally, the MMI couplers 71 and 72 have the multimode waveguide structures that allow many waveguide modes. Therefore, the waveguides (typically, single mode waveguide) are usually arranged at a starting end and a termination end in order to launch the light and also to take out the light from the multimode waveguide.

Since the multimode waveguide is the waveguide with step refractive index distribution, its mode order in the transverse direction of the cross section is far large compared with the mode order in the longitudinal direction of the cross section. For this reason, it can be regarded that all the modes in the longitudinal direction of the cross section are equal and many modes exist only in the transverse direction thereof, so that it can be assumed that the modes behave horizontally in the waveguide. Hence, hereinafter, it is given generality at a two-dimensional structure of the transverse direction of the cross section and the traveling direction of the mode, and it will be described as a two-dimensional multimode waveguide.

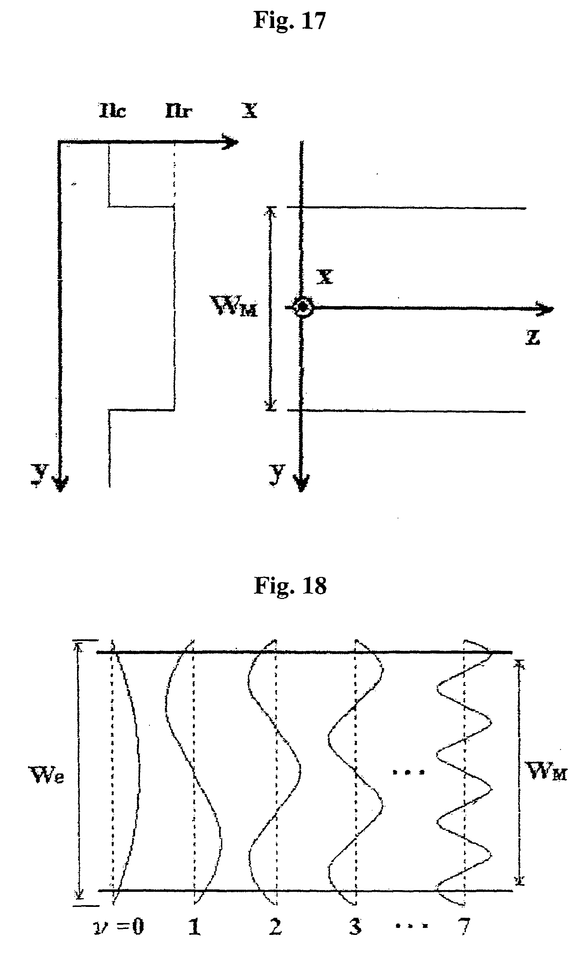

Namely, the MMI couplers 71 and 72 have a slab waveguide structure, and have a two-dimensional view as shown in Fig. 17. Incidentally, in the figure, W_{M} indicates a width of waveguide with step refractive index distribution, nᵣ indicates an equivalent refractive index of a ridge portion, and n_{c} indicates an equivalent refractive index of a cladding portion. The input light wave indicates the modes within the waveguide with step refractive index distribution as shown in Fig. 18. This waveguide allows the M-th order transverse modes, and the mode numbers are v= 0, 1, ... (M-1). Wₑ indicate an effective width. As described above, many modes with different propagation constants are excited in a wide area (multimode waveguide). Since the propagation constant is different depending on each mode, various interference aspects are shown as they propagate, and using results of these interferences, a suitable light intensity distribution is formed in the transverse direction perpendicular to a propagation direction, and the light is branched. By making the lights propagate in the opposite directions, it can make the light to multiplex and to couple.

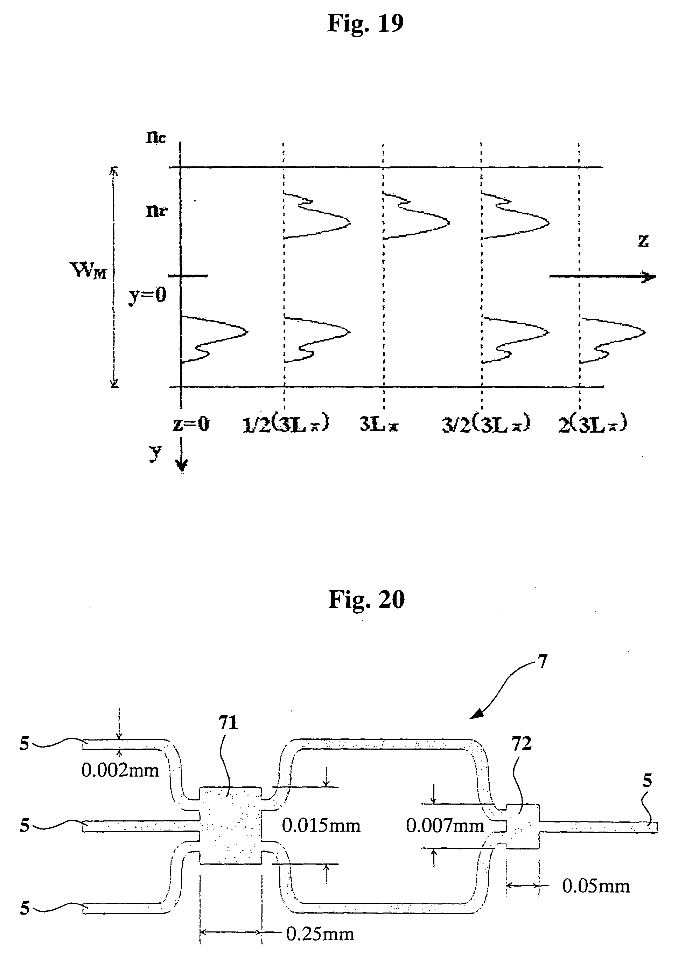

Fig. 19 shows a cross sectional view of the transverse mode of the multimode waveguide. Here, Lp indicates a difference of an oscillation length between a basic mode and a primary mode. As shown in figure, as starting point is Z=0, a plane of incidence which entirely includes Wₑ can be resolved into all-mode distribution.

Namely, the tapered branch coupler make the waveguides in close proximity to each other, and thereby it gradually branches the light to another waveguide or gradually couples the lights from another waveguide. On the other hand, as described above, the multimode interference-type branch coupler forms a suitable optical intensity distribution by exciting the mode, makes the light branch or propagate, and thereby makes the lights couple together. Therefore, the branch coupler 7 can be miniaturized, and as a consequence it can be miniaturized the optical isolator 1.

Next, embodiments will be shown about the miniaturized structures of respective portions constituting the optical isolator 1 contrasting with the conventional dimension.

### [Waveguiding layer 3]

While maintaining the lattice match to the substrate 2 (InP) using GaInAsP as the waveguiding layer 3, the refractive index of the waveguiding layer 3 is increased by quantifying the thickness of the waveguiding layer 3 to the operating wavelength and by changing the semiconductor composition.

### [Non-reciprocal phase shifter 4]

The length of the non-reciprocal phase shifter 4 will be described using Fig. 12 in a case where the thickness of the waveguiding layer 3 which generates the maximum amount of non-reciprocal phase shifting is taken to the above-mentioned refractive index of the waveguiding layer 3.

In the case of the conventional non-reciprocal phase shifter 4, the bandgap wavelength is λ_{g}=1.25µm to the operating wavelength λ=1.55µm, and in that case, the thickness of the waveguiding layer 3 (GaInAsP waveguiding layer) is 0.44µm, the refractive index thereof is 3.36, and the length of the non-reciprocal phase shifter 4 is 6.14mm. In the present embodiment, the bandgap wavelength is λ_{g}=1.42µm to the operating wavelength λ=1.55µm, and in that case, the thickness of the waveguiding layer 3 is 0.36µm, the refractive index thereof is 3.45, and the length of the non-reciprocal phase shifter 4 for obtaining the non-reciprocal phase shifting effect of p/2 is 3.73mm.

Incidentally, the present embodiment describes on occasion when the refractive index is 3.45 and the length of the non-reciprocal phase shifter 4 is 3.73mm as one example in order to show clearly numerical values. However, if it can be ensured a constant amount of the difference between the operating wavelength λ which is a variable value and the bandgap wavelength λ_{g} depending on the refractive index, and it is within a range which attenuation of the laser beam can be allowed, the length of the non-reciprocal phase shifter 4 can be shortened by increasing the refractive index.

### [Curved waveguide 6]

Since the refractive index of the waveguiding layer 3 is increased, thereby the optical confinement effect in the transverse direction within the waveguide 5 is enhanced, it can be made radius of curvature decrease less than 0.5mm. Since the radius of curvature is decreased to 0.5mm, the device length of the curved waveguide 6 requires only 0.55mm in order to obtain the amount of shift of 0.15mm in the transverse direction. Therefore, it can achieve a miniaturization of the curved waveguide 6.

Incidentally, the radius of curvature of the curved waveguide 6 is determined by the operating wavelength, the thickness of the waveguiding layer 3 corresponding to the operating wavelength, and the magnitude of the refractive index of the waveguiding layer 3. For this reason, while the numerical value of the aforementioned radius of curvature is one example, as long as the optical confinement effect in the transverse direction is obtained and the attenuation of the laser beam is within an allowable range from the relation between the operating wavelength and the bandgap wavelength, it is also possible to further miniaturize the device length of the curved waveguide 6 by decreasing the radius of curvature.

### [Branch coupler 7]

As shown in Fig. 4, in a case where the conventional tapered branch couplers 105 are used, the measurement of the tapered branch couplers 105 on the input side and the output side were both 0.41mm.

On the other hand, as shown in Fig. 20, in a case where the multimode interference-type branch coupler is used like the present invention, the measurement of the input portion MMI coupler 71 is 0.25mm and the measurement of the output portion MMI coupler 72 is 0.05mm.

Hence, as compared to the case utilizing the tapered branch coupler, it is possible to short the device length by about 0.52mm, and thereby it is possible to miniaturize the optical isolator 1.

Incidentally, the device lengths of the MMI couplers 71 and 72 are one example. However, as compared to the case using the conventional tapered branch coupler, it is possible to miniaturize the optical isolator 1 by utilizing the MMI couplers 71 and 72 as described above. Additionally, it is also possible to further miniaturize the optical isolator 1 depending on the MMI coupler to be used.

Moreover, the optical isolator according to the present invention can also change the constitution thereof as follows. Incidentally, since the other constitutions except for providing a lower cladding layer 10 on the substrate are the same as the aforementioned optical isolator, in what follows, the same symbol is given to the same component, and the detailed description thereof will be omitted. Additionally, while a non-reciprocal phase shifter is constituted by providing with the cladding layer 8 and the magnetic field applying means 9 as described above. However, in what follows, the cladding layer 8 will be denoted as the upper cladding layer 8 for easy understanding.

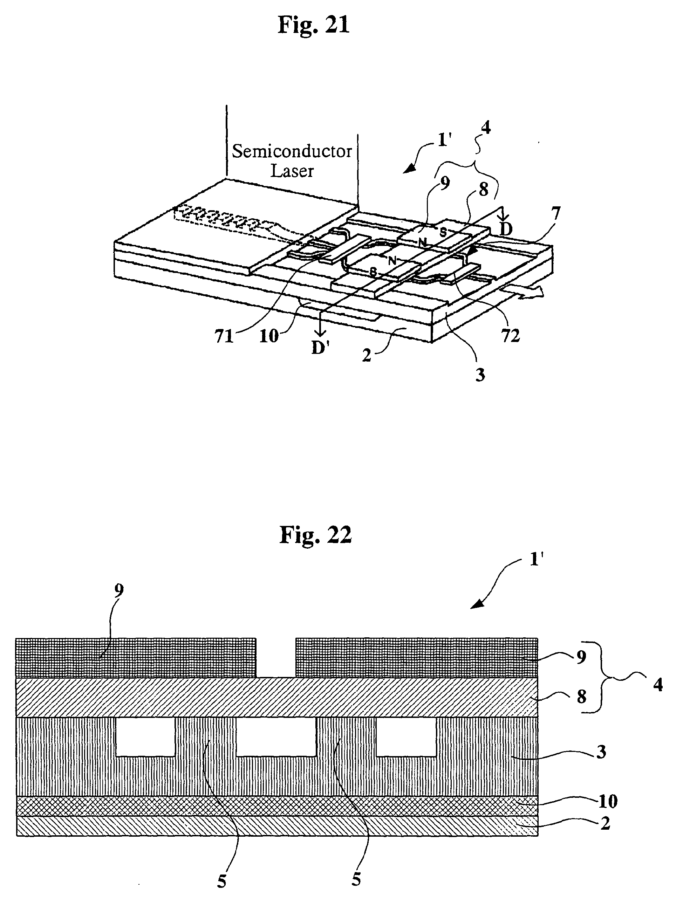

As shown in Fig. 21 with a perspective view, and shown in Fig. 22 with a D-D' cross sectional view in Fig. 21, an optical isolator 1' is constituted by providing with the substrate 2, the lower cladding layer 10, the waveguiding layer 3 in which the waveguide 5 and the curved waveguide 6 are formed and the branch coupler 7 is also provided, and the non-reciprocal phase shifter 4.

Namely, first of all, the optical isolator 1' form the lower cladding layer 10 which is crystal-grown on the substrate 2. And the waveguiding layer 3 which is crystal-grown using a semiconductor material is provided on the substrate 2 in which the lower cladding layer 10 is formed. Further, the non-reciprocal phase shifter 4 having the upper cladding layer 8 and the magnetic field applying means 9 is provided on the waveguiding layer 3. Additionally, like the aforementioned optical isolator 1, the waveguide 5 and the curved waveguide 6 which guide the waveguiding layer 3 are formed in the waveguiding layer 3, and the branch coupler 7 is also provided therein.

Incidentally, since the lower cladding layer 10 is provided in order to increase the amount of non-reciprocal phase shifting, what is necessary is to just be inserted at least in a position as shown in the figure, but it may be formed in the whole area on the substrate 2 of the optical isolator 1'.

As described above, the device length of the optical isolator 1' can be shortened by increasing the refractive index of the waveguiding layer 3.

In addition to this, if a refractive index of the lower cladding layer 10 can be decreased, the device length of the optical isolator 1' can be further shortened, and it is possible to be further miniaturized the optical isolator 1'.

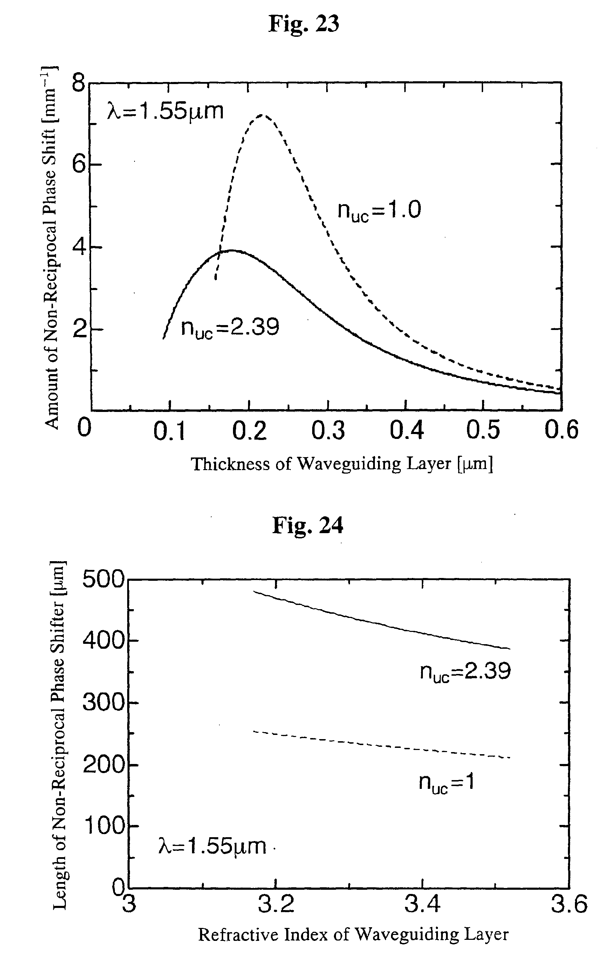

Fig. 23 is a graph showing a relation between the amount of non-reciprocal phase shifting and the thickness of the waveguiding layer 3. Namely, in a case where the refractive index (n_{uc}) of the lower cladding layer 10 is constant it is a graph showing a change of the amount of non-reciprocal phase shifting depending on a change of the thickness of the waveguiding layer 3. Incidentally, in Fig. 23, the operating wavelength of the semiconductor laser is λ=1.55µm, GaInAsP which a refractive index is 3.45 is used as the waveguiding layer 3, Ce: YIG (Faraday rotation coefficient=-4500 deg/cm) is used as the upper cladding layer 8, and AlInAs (refractive index n_{uc}=2.39) which oxidation treatment is performed is used as the lower cladding layer 10.

Additionally, in a case where air is used as the lower cladding layer 10 as an example with the most lowest refractive index, namely, a case where the refractive index is n_{uc}=1.0 is also shown in Fig. 23 with a dotted line.

From Fig.23, similar to the case where the lower cladding layer 10 is not provided (Fig.9), in a case where the refractive index of the waveguiding layer 3 and the refractive index of the lower cladding layer 10 are constant, it turns out that the amount of non-reciprocal phase shifting changes corresponding to the thickness of the waveguiding layer 3. Incidentally, the thickness of the waveguiding layer 3 which can be obtained the maximum amount of non-reciprocal phase shifting is 0.18µm in Fig. 23.

Additionally, Fig. 24 is a graph showing a relation between the refractive index of the waveguiding layer 3 and the length of the non-reciprocal phase shifter 4. Incidentally, in Fig. 24, the operating wavelength is λ=1.55µm, GaInAsP is used as the waveguiding layer 3, and a thickness thereof which can be obtained the maximum amount of non-reciprocal phase shifting at each refractive index of the waveguiding layer 3 is used.

Namely, assuming that the thickness of the waveguiding layer 3 is the thickness which the maximum amount of non-reciprocal phase shifting is obtained, Fig.24 shows that the calculation result of the length of the non-reciprocal phase shifter 4 required for the optical isolator 1' to the refractive index of the waveguiding layer 3 using the refractive index n_{uc} of the lower cladding layer 10 as a parameter.

From Fig. 24, it turns out that it is possible to shorten the length of the non-reciprocal phase shifter 4 as the refractive index n_{uc} of the lower cladding layer 10 is lower.

In a case where GaInAsP is used as the waveguiding layer 3, following method or the like is considered as a method of forming the lower cladding layer 10 whose refractive index n_{uc} is low,
(1) a method that the substrate 2 (for example InP, although it differs depending on the operating waveband) of the waveguiding layer 3 is removed by a method such as etching or the like, and the air cladding layer is used as the lower cladding layer 10,
(2) a method that, for example, a compound semiconductor including aluminum (AlInAs) is formed under the waveguiding layer 3 by crystal growth, after that, the refractive index of the AlInAs layer is decreased by oxidizing the compound semiconductor, and thereby it is used as the lower cladding layer 10.

The method of (1) can form the lower cladding layer 10 of air with the lowest refractive index. However, since it is formed by removing the substrate 2 located just below the waveguiding layer 3, there is a possibility that the problem of mechanical vulnerability occur in actual use.

Compared with this, the method of (2) can form the lower cladding layer 10 with the low refractive index between the substrate 2 and the waveguiding layer 3 keep it solid. For this reason, while achieving a shortening of the length of the non-reciprocal phase shifter 4 and thus the device length of the optical isolator 1', it is possible to avoid the problem of mechanical vulnerability as described above. Incidentally, in the method of (2), it is obtained from the experiments that the refractive index of the lower cladding layer 10 formed by oxidizing the AlInAs layer is 2.39.

As described above, the optical isolator 1 according to the present invention has been described taking a case as an example where the operating wavelength is λ=1.55µm. However, also in the operating wavelength is, for example, λ=1.31µm band other than the operating wavelength is λ=1.55µm, the propagation distance required to obtain the maximum amount of non-reciprocal phase shifting becomes short by increasing the refractive index of the waveguiding layer, and thereby the device length of the optical isolator is shortened, and it is possible to miniaturize the optical isolator.

So, hereinafter, it will describe in a case where the operating wavelength of the optical isolator is λ=1.31µm. Incidentally, since the other constitutions except the operating wavelength are the same as those of the case of the aforementioned optical isolator 1 where the operating wavelength is λ=1.55µm, the same symbol is given to the same component, and the detailed description thereof will be omitted.

Namely, there is shown a case where the operating wavelength of the semiconductor laser is λ=1.31µm, GaInAsP which the bandgap wavelength is λ_{g}=1.15µm is used as the waveguiding layer 3, Ce: YIG (refractive index is 2.202 at the operating wavelength λ=1.31µm, Faraday rotation coefficient=-7360 deg/cm) is used as the upper cladding layer 8, and InP (refractive index is 3.207 at the operating wavelength λ=1.31µm) is used as the substrate 2.

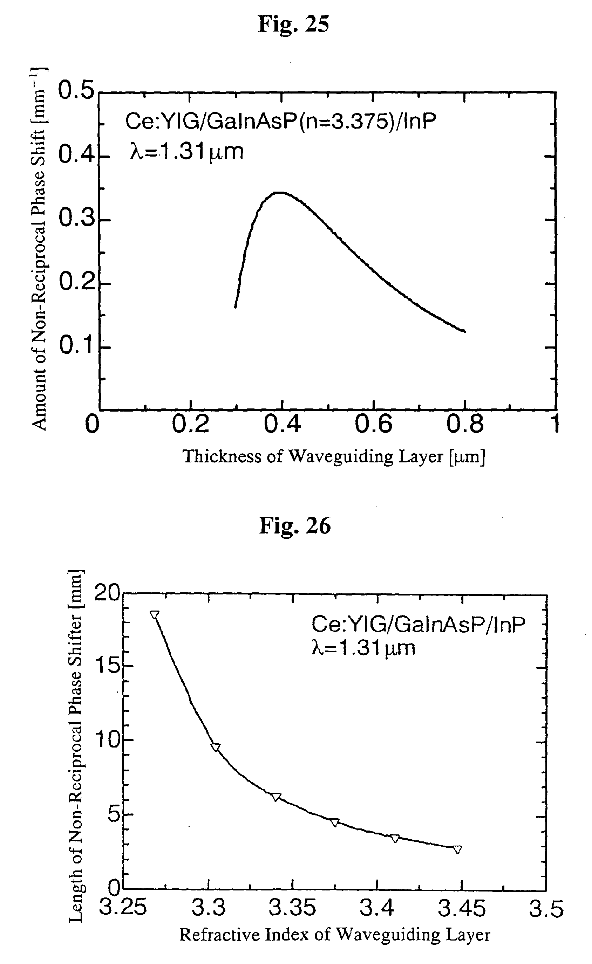

Fig. 25 shows a graph showing a relation between the thickness of the waveguiding layer 3 and the amount of non-reciprocal phase shifting. Namely, it shows one example of calculation results of the magnitude of the amount of non-reciprocal phase shifting by changing the thickness of the waveguiding layer 3 while being constant the refractive index of the waveguiding layer 3 at 3.375. Incidentally, in Fig. 25, the operating wavelength of the semiconductor laser is λ=1.31µm, InP is used as the substrate 2, GaInAsP with the refractive index of 3.375 is used as the waveguiding layer 3, and Ce: YIG is used as the cladding layer 8.

From Fig. 25, it turns out that the waveguiding layer 3 in which the operating wavelength is λ=1.31µm and the refractive index is 3.375 has the maximum amount of non-reciprocal phase shifting, when the thickness of the waveguiding layer 3 is 0.396µm.

Fig. 26 is a graph showing a relation between the refractive index of the waveguiding layer 3 and the length of the non-reciprocal phase shifter 4. Namely, Fig. 26 is a graph showing calculation results of a required propagation distance to obtain the amount of non-reciprocal phase shifting of p/2 required for the operation of the optical isolator 1 at each refractive index of the waveguiding layer 3. Incidentally, in Fig. 26, the operating wavelength is λ=1.31µm, GaInAsP is used as a waveguiding layer 3, and a thickness of the GaInAsP is the thickness which can be obtained the maximum amount of non-reciprocal phase shifting at each refractive index.

From Fig. 26, it turns out that since the required propagation distance to obtain a constant amount of non-reciprocal phase shifting as the refractive index of the waveguiding layer 3 is increased, the length of the non-reciprocal phase shifter 4 can be shortened. Namely, the amount of non-reciprocal phase shifting is increased by increasing the refractive index of the waveguiding layer 3, so that the length of the non-reciprocal phase shifter 4 required for the isolator operation can be shortened.

The higher the refractive index of the waveguiding layer 3 is, the larger such an effect is. However, in a case where GaInAsP which is lattice-matched to the substrate 2 is used as the waveguiding layer 3, to increase the refractive index of the waveguiding layer 3 will result in setting the bandgap wavelength λ_{g} to a longer wavelength. Meanwhile, as described above, since the optical isolator 1 is required to be low-loss, it is necessary to separate the bandgap wavelength λ_{g} to some extent to the operating wavelength λ. Namely, it is necessary to use GaInAsP which has a remarkably short bandgap wavelength λ_{g} compared with the operating wavelength λ as the waveguiding layer 3.

Hence, the waveguiding layer 3 with the highest refractive index of 3.447 in Fig. 26 corresponds to the bandgap wavelength λ_{g}=1.25µm, and when it is considered the operation at the waveband of 1.31µm (form 1.26µm to 1.36µm), to make the refractive index higher than this is difficult in a case where GaInAsP is used as the waveguiding layer 3.

## Claims

1. An optical isolator, comprising a substrate, a waveguiding layer lattice-matched to the substrate, and a non-reciprocal phase shifter, in which a waveguide and a curved waveguide for guiding the waveguiding layer are formed in the waveguiding layer, and an branch coupler is also provided in the waveguiding layer,
wherein a refractive index of the waveguiding layer is made larger than 3.36 by changing a semiconductor composition.

2. The optical isolator according to claim 1, wherein the waveguiding layer has a thickness to generate the maximum amount of non-reciprocal phase shifting to a refractive index of the waveguiding layer.

3. The optical isolator according to claim 1 or 2, wherein a length of the non-reciprocal phase shifter is made less than 6.14mm.

4. The optical isolator according to any one of claims 1 to 3, wherein a radius of curvature of the curved waveguide is less than 1.00mm.

5. The optical isolator according to any one of claims 1 to 4, wherein the branch coupler is a multimode interference-type branch coupler.

6. The optical isolator according to any one of claims 1 to 5, wherein a device length of the optical isolator is less than 10.08mm.

7. The optical isolator according to any one of claims 1 to 6, wherein the waveguiding layer is a III-V group compound semiconductor.

8. The optical isolator according to any one of claims 1 to 7, wherein the substrate is InP, and the waveguiding layer is GaₓIn₁₋ₓAs_{y}P_{1-y} (0<x<1, 0<y<1).
